# EUROPEAN PATENT SPECIFICATION

(11) **EP 3 385 131 B1**
(45) Date of publication and mention of the grant of the patent: **23.02.2022**
(21) Application number: 17164674.8
(22) Date of filing: 04.04.2017
(51) Int. Cl.: B60R 25/20, B60Q 1/50

(54) **VEHICLE INFORMATION SYSTEM**
FAHRZEUGINFORMATIONSSYSTEM
SYSTÈME D'INFORMATIONS DE VÉHICULE

(43) Date of publication of application: 10.10.2018
(73) Proprietor: Volvo Car Corporation, 40 531 Göteborg (SE)
(72) Inventor: Nilsson, M Julia, 413 14 Göteborg (SE); Brännström, Mr. Mattias, 41758 Göteborg (SE)
(74) Representative: Kransell & Wennborg KB

(56) References cited:
- CN-A- 102 700 460
- DE-A1- 2 308 728
- DE-A1-102014 201 089
- US-A1- 2009 003 006

## Description

### TECHNICAL FIELD

The present disclosure relates to a vehicle information system. The present disclosure also relates to vehicle comprising a vehicle information system and to a method for indicating an unclosed and/or unlocked compartment closing member of a vehicle.

### BACKGROUND

A vehicle generally comprises a plurality of compartment closing members each one of which being adapted to close an interior compartment of the vehicle to the environment ambient of the vehicle. Examples of such compartment closing members include vehicle doors, a luggage boot and a bonnet.

Vehicles of today, in particular cars, are generally furnished with a central locking device adapted to lock at least all the doors of the vehicle upon receipt of a single locking request. The single locking request may for instance be transmitted to the vehicle via a wireless signal. However, in order to be able to lock all the doors of a vehicle, a requisite is often that at least each one of the doors of the vehicle is properly closed. Thus, if one or more of the vehicle's doors is open, the central locking device is unable to lock all the doors.

Moreover, even if all doors are properly closed, there is a risk that one or more compartment closing members nevertheless is not locked properly during a locking procedure. For instance, a locking mechanism associated with one or more of the compartment closing members may be malfunctioning. If such an incorrect locking is not detected by an operator, there is a risk that the operator may leave the vehicle with one or more compartment closing members unlocked. Such a scenario is undesired from a theft prevention point of view.

As may be realized from the above, it would be desirable for an operator to receive information indicative of that a one or more compartment closing members is unclosed and/or unlocked. In particular, it would be desirable if an operator could be presented with information indicative of which compartment closing member(s) that has not been closed and/or locked.

### SUMMARY

It is an object of the present disclosure to provide a vehicle information system that can indicate when and which compartment closing members that are unclosed and/or unlocked.

The above object may be achieved by the subject matter of claim 1.

Thus, a first aspect of the present disclosure relates to a vehicle information system for a vehicle, wherein the vehicle comprises a set of compartment closing members. A compartment closing member is adapted to close an interior compartment of the vehicle to the environment ambient of the vehicle. The vehicle further comprises a set of operating lights, arranged outwardly of the vehicle, and intended to be used during driving of the vehicle.

The vehicle information system is adapted to:
- receive a compartment closing member signal indicative of a compartment closing member of the set of compartment closing members being unclosed and/or unlocked, and
- upon receipt of the compartment closing member signal, issue an information signal to the vehicle such that one or more of the lights in the set of outwardly arranged operating lights is activated to thereby indicate which compartment closing member of the set of compartment closing members is unclosed and/or unlocked, each compartment closing member being assigned an individual activation of the set of outwardly arranged operating lights.

A vehicle information system as recited above implies that if all the members of the set of compartment closing members is not properly closed and/or locked, the operating lights of the vehicle are utilized in order to present information indicative of which compartment closing member that is not properly closed and/or locked. This has the positive effect that the driver is provided with information outside the vehicle, not only that a compartment closing member is not properly closed and/or locked, but also which individual compartment closing member that needs to be closed and/or locked.

A further positive effect is that the assignment of an individual activation of the set of operating lights for each compartment closing member enables an intuitive display of the information from the outside of the vehicle to the driver indicative of which compartment closing member not being closed and/or locked properly. A further positive effect of the vehicle information system disclosed hereinabove is that it utilizes already existing functional parts and/or systems of the vehicle, such as the operating lights, that are normally used during driving or handling of the vehicle.

As set out above, a compartment closing member is adapted to close an interior compartment of the vehicle to the environment ambient of the vehicle.

As set out herein, operating lights refers to the lighting system of the vehicle which comprises lighting and signaling lights or lamps. Thus, the operating lights are responsible for lighting the roadway for the driver and/or increasing the conspicuity of the vehicle, allowing other drivers and pedestrians to see the vehicle's presence, position, size, direction of travel, and the driver's intentions regarding direction and speed of travel. To this end, operating lights may thus comprise at least one of front left and right direction indicators, rear left and right direction indicators, head (front) lights, tail lights and brake lights.

As a non-limiting example, the set of operating lights may comprise a set of lights each one of which being adapted to emit light from the vehicle. Moreover, again purely by way of example, each light in the set of operating lights may be arranged relative to the vehicle such that it can emit light from the vehicle which light need not pass through any portion of a passenger compartment of the vehicle before being emitted from the vehicle.

Optionally, the set of compartment closing members according to the embodiments herein may comprise at least one of a front door, a rear door, a luggage boot and a bonnet of the vehicle. Thus, the vehicle information system may optionally not necessarily only indicate unclosed and/or unlocked vehicle doors but may optionally also be adapted to indicate that a luggage boot and/or a bonnet of a vehicle is unclosed and/or unlocked.

Optionally, the set of outwardly arranged operating lights may comprise at least one of a left direction indicator, a right direction indicator, a headlight, a tail light and a brake light. It is advantageous to use already existing operating lights of the vehicle since this may reduce the cost of the vehicle comprising the vehicle information system. Moreover, an operator of a vehicle is generally familiar with the position and the function of the operating lights of a vehicle as a consequence of which the operator may intuitively associate an operating light to a specific compartment closing member.

Optionally, each compartment closing member of the set of compartment closing members may be assigned an individual sub-set of said set of operating lights. This enables for an intuitive display of which compartment closing member that is unclosed or unlocked, which display may be readily visible from the outside of the vehicle.

According to the claimed invention, upon receipt of a signal indicating that the left front or left rear door is unclosed and/or unlocked, a warning signal for activating the left front or left rear direction indicator, respectively, is issued.

As a non-limiting example, the vehicle information system may be adapted to:
- issue a warning signal for activating the right front direction indicator upon receipt of a signal indicating that the right front door is unclosed and/or unlocked, and/or
- issue a warning signal for activating the right rear direction indicator upon receipt of a signal indicating that the right rear door is unclosed and/or unlocked, and/or
- issue a warning signal for activating the tail lights and/or brake lights upon receipt of a signal indicating that the luggage boot of the vehicle is unclosed and/or unlocked, and/or
- issue a warning signal for activating the head lights upon receipt of a signal indicating that the bonnet is unclosed and/or unlocked.

Optionally, the vehicle information system may be adapted such that only the warning signals according to the embodiments herein are issued, thus not in combination or in addition to any additional issuing of warning signals interior or exterior of the vehicle.

Optionally, the vehicle information system may be adapted such that upon receipt of the compartment closing member signal indicative of an unclosed and/or unlocked compartment closing member, the vehicle information system issues an information signal to the vehicle such that the information of an unclosed and/or unlocked compartment closing member and/or which compartment closing member of the set of compartment closing members is unclosed and/or unlocked is indicated inside the vehicle and/or via a cellular device and/or a key.

Optionally, each compartment closing member of the set of compartment closing members may be assigned an individual flashing frequency or pattern of one or more of the operating lights of said set of operating lights. This enables for an intuitive display of which compartment closing member needs to be closed and/or locked, and in a readily visible way from the outside of the vehicle. Arranging the operating lights to flash at a specific frequency or pattern also has the positive effect of distinguish the signaling issued by the vehicle information system from signaling relating to other systems of the vehicle. Further, the flashing at a specific frequency or pattern may also have the advantage that information indicative of which compartment closing member that is unclosed and/or unlocked may be visible from any side of the vehicle.

For example, one or more of the operating lights of the set of operating lights may be arranged to be activated in a sequence to lead the driver of the vehicle to the unclosed compartment closing member. As a non-limiting example, if the driver is standing at the front left vehicle door and attempts to lock the vehicle and the rear right vehicle door is unclosed and/or unlocked, operating lights on the left side of the vehicle may be activated in sequence to guide the driver to the rear right vehicle door, e.g. first left front direction indicator is activated, followed by left rear direction indicator, and followed by rear right direction indicator. As yet another non-limiting example, the same one or more operating lights may be activated but at different flashing frequency or pattern depending on which compartment closing member is unclosed and/or unlocked. For example, the information signal to the vehicle may be such that the at least one light of the set of operating lights transmits one flash for an unclosed and/or unlocked front left door, two flashes for an unclosed and/or unlocked rear left door, three flashes for an unclosed and/or unlocked front right door etc.

Optionally, the individual subset of operating lights assigned to each compartment closing member may further be assigned an individual flashing frequency or pattern.

Optionally, the vehicle further may comprise audio signaling means, such as the horn of the vehicle, wherein the vehicle information system according to the present disclosure may further be adapted to issue an audio warning signal to the vehicle such that the audio signaling means is activated to thereby indicate that at least one compartment closing member of the set of compartments sealing members is unclosed and/or unlocked. The above features imply that the driver is alerted via sound to notice the light signaling.

Optionally, the vehicle information system may be adapted to receive a locking signal indicative of that the at least a subset of the set of compartment closing members is to be locked. There are numerous situations in which a compartment closing member may intentionally be left open and/or unlocked. Purely by way of example, such situations could occur during loading, maintenance or repair of the engine, or leaving a front or rear door open for a prolonged time for ventilating or cleaning the interior of the vehicle. Taking such circumstances into account, it is advantageous that the vehicle information system may be set to be activated upon receiving an indication, for example from the driver, that an attempt to lock the vehicle has been initiated.

Optionally, the vehicle information system may be adapted to receive the compartment closing member signal and issue said information signal upon receipt of the locking signal. Thus, the vehicle information system in this case is set into action only when an indication is received, for example from the driver, that an actual attempt to lock to vehicle is initiated.

A second aspect of the present disclosure relates to a vehicle comprising a vehicle information system according to the first aspect of the present disclosure.

A third aspect of the present disclosure relates to a method according to claim 10.

Optionally, the set of compartment closing members according to the embodiments herein may comprise at least one of a front door, rear door, luggage boot and bonnet of the vehicle.

Optionally, the set of outwardly arranged operating lights according to the embodiments herein may comprise at least one of a left direction indicator, a right direction indicator, a headlight, a tail light and a brake light.

Optionally, each compartment closing member of the set of compartment closing members may be assigned an individual sub-set of said set of operating lights.

Optionally, each compartment closing member of the set of compartment closing members may be assigned an individual flashing frequency or pattern of one or more of the operating lights of said set of operating lights.

Optionally, the method may further comprise:
- detecting that at least a subset of the set of compartment closing members is to be locked, and
- upon detection that the set of compartment closing members are to be locked, performing the method procedure according to the third aspect of the present disclosure.

### BRIEF DESCRIPTION OF THE DRAWINGS

The present disclosure will hereinafter be further explained by means of non-limiting examples with reference to the appended drawings wherein:
- Fig. 1: illustrates a vehicle comprising a vehicle information system;
- Fig. 2A: illustrates an embodiment of a method for indicating an unclosed and/or unlocked compartment closing member of a vehicle, and
- Fig. 2B: illustrates another embodiment of a method for indicating an unclosed and/or unlocked compartment closing member of a vehicle.

It should be noted that the appended drawings are not necessarily drawn to scale and that the dimensions of some features of the present disclosure may have been exaggerated for the sake of clarity.

### DETAILED DESCRIPTION

The disclosure will, in the following, be exemplified by embodiments. It should however be realized that the embodiments are included in order to explain principles of the disclosure and not to limit the scope of the disclosure, defined by the appended claims. Details from two or more of the embodiments may be combined with each other.

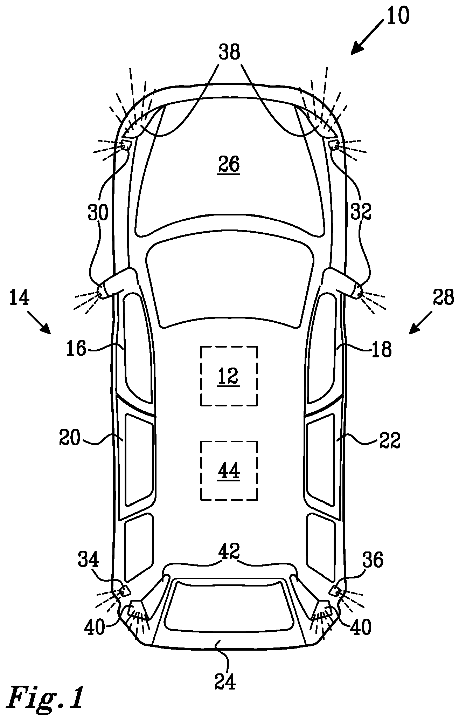

Figure 1 illustrates a vehicle 10 comprising a vehicle information system 12 according to an embodiment of the present disclosure. Moreover, the vehicle 10 comprises a set of compartment closing members 14. A compartment closing member is adapted to close an interior compartment of the vehicle to the environment ambient of the vehicle. As such, a compartment closing member may be a front left door 16, a front right door 18, a rear left door 20, a rear right door 22, a luggage boot 24 or a bonnet 26. The luggage boot 24 may also be referred to as a tailgate. Further, the bonnet 26 may be referred to as a hood.

As a non-limiting example, the vehicle 10 may comprise a passenger compartment and an engine compartment. Moreover, though purely by way of example, each one of the doors 16, 18, 20, 22 - and possibly also the luggage boot 24 if the vehicle 10 is an estate car or a station wagon - may be adapted to close the passenger compartment to the environment ambient of the vehicle 10. Moreover, as a non-limiting example, the bonnet 26 may be adapted to close the engine compartment to the environment ambient of the vehicle 10.

The vehicle 10 illustrated in Figure 1 has six compartment closing members depicted, two front doors, two rear doors, a luggage boot and a bonnet. Purely by way of example the set of compartment closing members 14 of the vehicle 10 may comprise at least one of the front door 16, 18, the rear door 20, 22, the luggage boot 24 and the bonnet 26.

The Fig. 1 vehicle 10 further comprises a set of operating lights 28, arranged outwardly of the vehicle 10, and intended to be used during driving or parking of said vehicle 10. As set out herein, operating lights refers to the lighting system of the vehicle which comprises lighting and signaling lights or lamps. Thus, the operating lights are responsible for lighting the roadway for the driver and/or increasing the conspicuity of the vehicle, allowing other drivers and pedestrians to see the vehicle's presence, position, size, direction of travel, and the driver's intentions regarding direction and speed of travel.

To this end, operating lights may thus comprise a front left direction indicator 30, a front right direction indicator 32, a rear left direction indicator 34, a rear right direction indicator 36, head (front) lights 38, tail lights 40 and brake lights 42. A direction indicator may also be referred to as a blinker.

The vehicle 10 in Figure 1 is illustrated having front left and right direction indicators 30, 32, rear left and right direction indicators 34, 36, head lights 38, tail lights 40 and/or brake lights 42. However, it is also envisaged that embodiments of the vehicle 10 may comprise one or more of a left direction indicator, a right direction indicator, a headlight, a tail light and a brake light.

The vehicle information system 12 according to the present disclosure is adapted to receive a compartment closing member signal indicative of a compartment closing member 16, 18, 20, 22, 24, 26 of the set of compartment closing members 14 being unclosed and/or unlocked.

Purely by way of example, one or more, preferably each compartment closing member of a vehicle may be associated with a locking mechanism (not shown). Moreover, though again purely by way of example, the locking mechanism may be adapted to determine whether or not the locking mechanism has successfully locked its associated compartment closing member 16, 18, 20, 22, 24, 26. As a non-limiting example, upon detection that the locking mechanism has not successfully locked its associated compartment closing member 16, 18, 20, 22, 24, 26, the locking mechanism may be adapted to issue the sealing member signal, e.g. via wires (not shown) or via wireless communication means, to the vehicle information system 12 indicative of that the associated compartment closing member 16, 18, 20, 22, 24, 26 is unclosed and/or unlocked.

The system 12 is further adapted to, upon receipt of the compartment closing member signal, issue an information signal to the vehicle 10, e.g. via wires (not shown) or via wireless communication means, such that one or more of the lights in the set of outwardly arranged operating lights 28 is activated to thereby indicate which compartment closing member of the set of compartment closing members 14 that is unclosed and/or unlocked. Each compartment closing member 16, 18, 20, 22, 24, 26 is assigned an individual activation of the set of outwardly arranged operating lights.

The individual activation of the set of outwardly arranged operating lights 28 may be achieved in a plurality of different ways. As a non-limiting example, each compartment closing member 16, 18, 20, 22, 24, 26 of the set of compartment closing members 14 may be assigned an individual sub-set of the set of operating lights 28.

For example, the vehicle information system 12 is or may be adapted to:
- issue a warning signal for activating the left front direction indicator 30 upon receipt of a signal indicating that the left front door 16 is unclosed and/or unlocked, and/or
- issue a warning signal for activating the right front direction indicator upon 32 receipt of a signal indicating that the right front door 18 is unclosed and/or unlocked, and/or
- issue a warning signal for activating the left rear direction indicator 34 upon receipt of a signal indicating that the left rear door 20 is unclosed and/or unlocked, and/or
- issue a warning signal for activating the right rear direction indicator 36 upon receipt of a signal indicating that the right rear door 22 is unclosed and/or unlocked, and/or
- issue a warning signal for activating the tail lights 40 and/or the brake lights 42 upon receipt of a signal indicating that the luggage boot 24 is unclosed and/or unlocked, and/or
- issue a warning signal for activating the head lights 38 upon receipt of a signal indicating that the bonnet 26 is unclosed and/or unlocked.

The activation of each one of the above lights may be such that a fixed light or a flashing light is issued.

The non-limiting examples above illustrate how the assignment of an individual subset of the set of operating lights 28 to each compartment closing member 16, 18, 20, 22, 24, 26 implies an intuitive display of the information of which compartment sealing member 16, 18, 20, 22, 24, 26 is unclosed and/or unlocked to the driver outside the vehicle 10. However, other combinations than the example above are also envisaged.

Instead of, or in addition to, assigning an individual subset of the set of operating lights 28 to each compartment closing member 16, 18, 20, 22, 24, 26, each compartment closing member 16, 18, 20, 22, 24, 26 of the set of compartment closing members 14 may be assigned an individual flashing frequency or pattern of one or more of the operating lights of said set of operating lights 28.

As a result thereof, for example, the same set of operating lights may be used for the compartment closing members of the set of compartment closing members 14, but with individual flashing frequency or pattern depending on which compartment closing member is unclosed and/or unlocked. In this context, a flashing frequency or pattern for one or more operating lights means activation, e.g. the lights are turned on and off, in an individual pattern. The driver will quickly be able to learn which compart sealing member is assigned a specific individual frequency.

By way of another example, one or more of the operating lights of the set of operating lights may be arranged to be activated in a sequence to lead the driver of the vehicle 10 to the unclosed door. As a non-limiting example, if the driver is standing at the front left vehicle door 16 and attempts to lock the vehicle 10 and the rear right vehicle door 22 is unclosed/unlocked, operating lights on the left side of the vehicle may be activated in sequence to thereby guide the driver to the rear vehicle door 22. Purely by way of example, such a sequence may comprise firstly activating the left front direction indicator 30, followed by the left rear direction indicator 34, thereafter followed by the rear right direction indicator 36.

In case the vehicle 10 further comprises audio signaling means 44, such as a horn or loudspeaker, the vehicle information system 12 according to embodiments herein may further be adapted to issue an audio warning signal to the vehicle 10 such that the audio signaling means 44 is activated to thereby indicate that at least one compartment closing member of the set of compartments sealing members 14 is unclosed and/or unlocked. In this way, the driver is alerted through sound that the vehicle 10 is unlocked in case the driver walks away from the vehicle 10 without noticing the activation one or more operating lights.

The vehicle information system may further be adapted to receive a locking signal indicative of that the at least a subset of the set of compartment closing members is to be locked. Purely by way of example, a wireless communication device such as a key (not shown), a smartphone (not shown) may be controlled by an operator so as to issue the locking signal to the vehicle 10. The vehicle 10 may in turn comprise means (not shown) for receiving such a signal. As another non-limiting example, an operator may initiate the issuance of a locking signal by manually locking one of the compartment closing member 16, 18, 20, 22, 24, 26, for instance using a physical key (not shown).

Furthermore, the vehicle information system may be adapted to receive the compartment closing member signal and issue said information signal upon receipt of the locking signal. Thus, the vehicle information system in this case is set into action only when an indication is received, for example from the driver, that an actual attempt to lock to vehicle 10 is initiated. To this end, it should be noted that there are numerous situations in which a compartment closing member 16, 18, 20, 22, 24, 26 is intentionally left open and/or unlocked. Purely by way of example, such situations could occur during loading or unloading, maintenance or repair of the engine, or just leaving a front or rear door open for a prolonged time to ventilate or clean the interior of the vehicle are. Taking such circumstances into account, it is advantageous that the vehicle information system 12 may be set to be activated upon receipt of an indication that an attempt to lock the vehicle 10 has been initiated, for instance by an operator such as a driver of the vehicle 10.

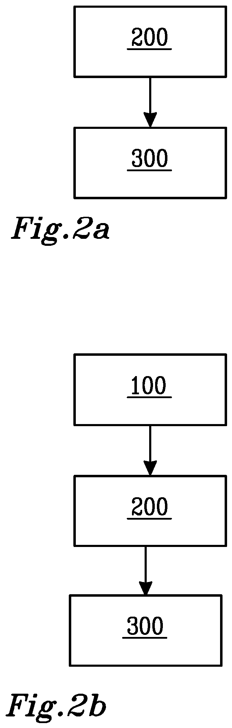

Figure 2a illustrates a method for indicating an unclosed and/or unlocked compartment closing member of a vehicle 10. The vehicle 10 comprises a set of compartment closing members 14 adapted to close an interior compartment of the vehicle to the environment ambient of the vehicle. The vehicle further comprises a set of operating lights 28, arranged outwardly of the vehicle, and intended to be used during driving of the vehicle 10.

The method comprises
- upon detection 200 that a compartment closing member of the set of compartment closing members is unclosed and/or unlocked, activating 300 one or more of the lights in the set of outwardly arranged operating lights 28 to thereby indicate which compartment closing member of the set of compartment closing members 14 is unclosed and/or unlocked, each compartment closing member being assigned an individual activation of the set of outwardly arranged operating lights.

A compartment closing member is adapted to close an interior compartment of the vehicle to the environment ambient of the vehicle. As such, a compartment closing member may be a front left or right door 16, 18, a rear left or right door 20, 22, a luggage boot 24 or a bonnet 26. Optionally, in some embodiments herein, the set of compartment closing members 14 of the vehicle 10 may comprise at least one of a front door, a rear door, a luggage boot and a bonnet.

As a non-limiting example, and as indicated hereinabove, the set of outwardly arranged operating lights 28 may comprise at least one of a left direction indicator 30, 34, a right direction indicator 32, 36, a headlight 38, a tail light 40 and a brake light 42.

As illustrated in Figure 2b, the method may further comprise:
- detecting 100 that at least a subset of the set of compartment closing members 14 is to be locked, and
- upon detection that the set of compartment closing members 14 is to be locked, performing the method procedure 200, 300 as described above.

## Claims

1. A vehicle information system (12) for a vehicle (10), said vehicle (10) comprising a set of compartment closing members (14) adapted to close an interior compartment of the vehicle (10) to the environment ambient of the vehicle (10), wherein said set of compartment closing members (14) comprises a left front door (16) and a left rear door (20), said vehicle (10) further comprising a set of operating lights (28), arranged outwardly of the vehicle (10), and intended to be used during driving of said vehicle (10), wherein said set of operating lights comprises a left front direction indicator (30) and a left rear direction indicator (34), said vehicle information system (12) being adapted to:
- receive a compartment closing member signal indicative of a compartment closing member (16, 18, 20, 22, 24, 26) of said set of compartment closing members (14) being unclosed and/or unlocked, and
- upon receipt of said compartment closing member signal, issue an information signal to said vehicle (10) such that one or more of the lights in said set of outwardly arranged operating lights (28) is activated to thereby indicate which compartment closing member of said set of compartment closing members (14) is unclosed and/or unlocked, each compartment closing member (16, 18, 20, 22, 24, 26) being assigned an individual activation of said set of outwardly arranged operating lights (28), wherein
- upon receipt of a signal indicating that the left front door is unclosed and/or unlocked, issue a warning signal for activating the left front direction indicator, and
- upon receipt of a signal indicating that the left rear door is unclosed and/or unlocked, issue a warning signal for activating the left rear direction indicator.

2. The vehicle information system (12) according to claim 1, wherein said set of compartment closing members (14) comprises at least one of a front door (18), a rear door (22), a luggage boot (24) and a bonnet (26) of said vehicle (10).

3. The vehicle information system (12) according to claim 1 or 2, wherein said set of outwardly arranged operating lights (28) comprises at least one of a right direction indicator (32, 36), a headlight (38), a tail light (40) and a brake light (42).

4. The vehicle information system (12) according to any one of the preceding claims, wherein each compartment closing member (16, 18, 20, 22, 24, 26) of said set of compartment closing members (14) is assigned an individual sub-set of said set of operating lights (28).

5. The vehicle information system (12) according to any one of the preceding claims, wherein each compartment closing member (16, 18, 20, 22, 24, 26) of said set of compartment closing members (14) is assigned an individual flashing frequency or pattern of one or more of the operating lights of said set of operating lights (28).

6. The vehicle information system (12) according to any one of the preceding claims, said vehicle (10) further comprising audio signalling means (44), said vehicle information system (12) further being adapted to issue an audio warning signal to said vehicle (10) such that said audio signalling means (44) is activated to thereby indicate that at least one compartment closing member of said set of compartments sealing members (14) is unclosed and/or unlocked.

7. The vehicle information system (12) according to any one of the preceding claims, said vehicle information system (12) being adapted to receive a locking signal indicative of that said at least a subset of the set of compartment closing members (14) is to be locked.

8. The vehicle information system (12) according to claim 7, wherein said vehicle information system (12) is adapted to receive said compartment closing member signal and issue said information signal upon receipt of said locking signal.

9. A vehicle (10) comprising a vehicle information system (12) according to any one of the preceding claims.

10. A method for indicating an unclosed and/or unlocked compartment closing member of a vehicle, said vehicle comprising a set of compartment closing members (14) adapted to close an interior compartment of the vehicle (10) to the environment ambient of the vehicle (10), , wherein said set of compartment closing members (14) comprises a left front door (16) and a left rear door (20), said vehicle (10) further comprising a set of operating lights (28), arranged outwardly of the vehicle (10), and intended to be used during driving of said vehicle (10), wherein said set of operating lights comprises a left front direction indicator (30) and a left rear direction indicator (34), said method comprising
- upon detection that a compartment closing member (16, 18, 20, 22, 24, 26) of said set of compartment closing members (14) is unclosed and/or unlocked, activating one or more of the lights in said set of outwardly arranged operating lights (28) to thereby indicate which compartment closing member of said set of compartment closing members (14) is unclosed and/or unlocked, each compartment closing member (16, 18, 20, 22, 24, 26) being assigned an individual activation of said set of outwardly arranged operating lights, wherein
- upon detection that the left front door is unclosed and/or unlocked, issuing a warning signal for activating the left front direction indicator, and
- upon detection that the left rear door is unclosed and/or unlocked, issue a warning signal for activating the left rear direction indicator.

11. The method according to claim 10, wherein said set of compartment closing members (14) comprises at least one of a front door (18), a rear door (22), a luggage boot (24) and bonnet (26) of said vehicle (10).

12. The method according to claim 10 or 11, wherein said set of outwardly arranged operating lights (28) comprises at least one of a right direction indicator (32, 36), a headlight (38), a tail light (40) and a brake light (42).

13. The method according to any one of claims 10 to 12, wherein each compartment closing member of said set of compartment closing members (14) is assigned an individual sub-set of said set of operating lights.

14. The method according to any one of claims 10 to 13, wherein each compartment closing member (16, 18, 20, 22, 24, 26) of said set of compartment closing members (14) is assigned an individual flashing frequency or pattern of one or more of the operating lights of said set of operating lights (28).

15. The method according to any one of claims 10 to 14, wherein said method further comprises:
- detecting that at least a subset of said set of compartment closing members (14) is to be locked, and
- upon detection that said set of compartment closing members (14) are to be locked, performing the method procedure according to any one of claims 10 to 14.

## Patentansprüche

1. Fahrzeuginformationssystem (12) für ein Fahrzeug (10), wobei das Fahrzeug (10) einen Satz von Raumverschlusselementen (14) umfasst, die dazu ausgelegt sind, einen Innenraum des Fahrzeugs (10) zur Umgebung des Fahrzeugs (10) zu verschließen, wobei der Satz von Raumverschlusselementen (14) eine linke Vordertür (16) und eine linke Hintertür (20) umfasst, wobei das Fahrzeug (10) ferner einen Satz von Betriebsleuchten (28) umfasst, die außerhalb des Fahrzeugs (10) angeordnet und dafür vorgesehen sind, während einer Fahrt des Fahrzeugs (10) verwendet zu werden, wobei der Satz von Betriebsleuchten einen linken vorderen Richtungsanzeiger (30) und einen linken hinteren Richtungsanzeiger (34) umfasst, wobei das Fahrzeuginformationssystem (12) zu Folgendem ausgelegt ist:
- Empfangen eines Raumverschlusselementsignals, das anzeigt, dass ein Raumverschlusselement (16, 18, 20, 22, 24, 26) des Satzes von Raumverschlusselementen (14) unverschlossen und/oder unverriegelt ist, und
- bei Empfang des Raumverschlusselementsignals, Ausgeben eines Informationssignals an das Fahrzeug (10), so dass eine oder mehrere der Leuchten in dem Satz von außerhalb angeordneten Betriebsleuchten (28) aktiviert wird, um dadurch anzuzeigen, welches Raumverschlusselement des Satzes von Raumverschlusselementen (14) unverschlossen und/oder unverriegelt ist, wobei jedes Raumverschlusselement (16, 18, 20, 22, 24, 26) einer individuellen Aktivierung des Satzes von außerhalb angeordneten Betriebsleuchten (28) zugewiesen ist, wobei
- bei Empfang eines Signals, das anzeigt, dass die linke Vordertür unverschlossen und/oder unverriegelt ist, Ausgeben eines Warnsignals zum Aktivieren des linken vorderen Richtungsanzeigers, und
- bei Empfang eines Signals, das anzeigt, dass die linke Hintertür unverschlossen und/oder unverriegelt ist, Ausgeben eines Warnsignals zum Aktivieren des linken hinteren Richtungsanzeigers.

2. Fahrzeuginformationssystem (12) nach Anspruch 1, wobei der Satz von Raumverschlusselementen (14) mindestens eines einer Vordertür (18), einer Hintertür (22), eines Gepäckraums (24) und einer Motorhaube (26) des Fahrzeugs (10) umfasst.

3. Fahrzeuginformationssystem (12) nach Anspruch 1 oder 2, wobei der Satz von außerhalb angeordneten Betriebsleuchten (28) mindestens eines eines rechten Richtungsanzeigers (32, 36), eines Scheinwerfers (38), einer Rückleuchte (40) und einer Bremsleuchte (42) umfasst.

4. Fahrzeuginformationssystem (12) nach einem der vorhergehenden Ansprüche, wobei jedes Raumverschlusselement (16, 18, 20, 22, 24, 26) des Satzes von Raumverschlusselementen (14) einem individuellen Teilsatz des Satzes von Betriebsleuchten (28) zugewiesen ist.

5. Fahrzeuginformationssystem (12) nach einem der vorhergehenden Ansprüche, wobei jedes Raumverschlusselement (16, 18, 20, 22, 24, 26) des Satzes von Raumverschlusselementen (14) einer/m individuellen Blinkfrequenz oder -muster eines oder mehrerer der Betriebsleuchten des Satzes von Betriebsleuchten (28) zugewiesen ist.

6. Fahrzeuginformationssystem (12) nach einem der vorhergehenden Ansprüche, wobei das Fahrzeug (10) ferner ein akustisches Signalmittel (44) umfasst, wobei das Fahrzeuginformationssystem (12) ferner dazu ausgelegt ist, ein akustisches Warnsignal an das Fahrzeug (10) auszugeben, so dass das akustische Signalmittel (44) aktiviert wird, um dadurch anzuzeigen, dass mindestens ein Raumverschlusselement des Satzes von Raumversiegelungselementen (14) unverschlossen und/oder unverriegelt ist.

7. Fahrzeuginformationssystem (12) nach einem der vorhergehenden Ansprüche, wobei das Fahrzeuginformationssystem (12) dazu ausgelegt ist, ein Verriegelungssignal zu empfangen, das anzeigt, dass mindestens ein Teilsatz des Satzes von Raumverschlusselementen (14) verriegelt werden soll.

8. Fahrzeuginformationssystem (12) nach Anspruch 7, wobei das Fahrzeuginformationssystem (12) dazu ausgelegt ist, das Raumverschlusselementsignal zu empfangen und das Informationssignal bei Empfang des Verriegelungssignals auszugeben.

9. Fahrzeug (10), das ein Fahrzeuginformationssystem (12) nach einem der vorhergehenden Ansprüche umfasst.

10. Verfahren zum Anzeigen eines unverschlossenen und/oder unverriegelten Raumverschlusselements eines Fahrzeugs, wobei das Fahrzeug einen Satz von Raumverschlusselementen (14) umfasst, die dazu ausgelegt sind, einen Innenraum des Fahrzeugs (10) zur Umgebung des Fahrzeugs (10) zu verschließen, wobei der Satz von Raumverschlusselementen (14) eine linke Vordertür (16) und eine linke Hintertür (20) umfasst, wobei das Fahrzeug (10) ferner einen Satz von Betriebsleuchten (28) umfasst, die außerhalb des Fahrzeugs (10) angeordnet und dafür vorgesehen sind, während einer Fahrt des Fahrzeugs (10) verwendet zu werden, wobei der Satz von Betriebsleuchten einen linken vorderen Richtungsanzeiger (30) und einen linken hinteren Richtungsanzeiger (34) umfasst, wobei das Verfahren umfasst
- bei Detektion, dass ein Raumverschlusselement (16, 18, 20, 22, 24, 26) des Satzes von Raumverschlusselementen (14) unverschlossen und/oder unverriegelt ist, Aktivieren einer oder mehrerer der Leuchten in dem Satz von außerhalb angeordneten Betriebsleuchten (28), um dadurch anzuzeigen, welches Raumverschlusselement des Satzes von Raumverschlusselementen (14) unverschlossen und/oder unverriegelt ist, wobei jedes Raumverschlusselement (16, 18, 20, 22, 24, 26) einer individuellen Aktivierung des Satzes von außerhalb angeordneten Betriebsleuchten zugewiesen ist, wobei
- bei Detektion, dass die linke Vordertür unverschlossen und/oder unverriegelt ist, Ausgeben eines Warnsignals zum Aktivieren des linken vorderen Richtungsanzeigers, und
- bei Detektion, dass die linke Hintertür unverschlossen und/oder unverriegelt ist, Ausgeben eines Warnsignals zum Aktivieren des linken hinteren Richtungsanzeigers.

11. Verfahren nach Anspruch 10, wobei der Satz von Raumverschlusselementen (14) mindestens eines einer Vordertür (18), einer Hintertür (22), eines Gepäckraums (24) und einer Motorhaube (26) des Fahrzeugs (10) umfasst.

12. Verfahren nach Anspruch 10 oder 11, wobei der Satz von außerhalb angeordneten Betriebsleuchten (28) mindestens eines eines rechten Richtungsanzeigers (32, 36), eines Scheinwerfers (38), einer Rückleuchte (40) und eine Bremsleuchter (42) umfasst.

13. Verfahren nach einem der Ansprüche 10 bis 12, wobei jedes Raumverschlusselement des Satzes von Raumverschlusselementen (14) einem individuellen Teilsatz des Satzes von Betriebsleuchten zugewiesen ist.

14. Verfahren nach einem der Ansprüche 10 bis 13, wobei jedes Raumverschlusselement (16, 18, 20, 22, 24, 26) des Satzes von Raumverschlusselementen (14) einer/m individuellen Blinkfrequenz oder -muster eines oder mehrerer der Betriebsleuchten des Satzes von Betriebsleuchten (28) zugewiesen ist.

15. Verfahren nach einem der Ansprüche 10 bis 14, wobei das Verfahren ferner umfasst:
- Detektieren, dass mindestens ein Teilsatz des Satzes von Raumverschlusselementen (14) verriegelt werden soll, und
- bei Detektion, dass der Satz von Raumverschlusselementen (14) verriegelt werden soll, Durchführen des Verfahrensablaufs nach einem der Ansprüche 10 bis 14.

## Revendications

1. Système d'informations de véhicule (12) pour un véhicule (10), ledit véhicule (10) comprenant un ensemble d'éléments de fermeture de compartiment (14) adaptés pour fermer un compartiment intérieur du véhicule (10) à l'environnement ambiant du véhicule (10), dans lequel ledit ensemble d'éléments de fermeture de compartiment (14) comprend une porte avant gauche (16) et une porte arrière gauche (20), ledit véhicule (10) comprenant en outre un ensemble de lumières opérationnelles (28), agencées vers l'extérieur du véhicule (10), et destinées à être utilisées pendant la conduite dudit véhicule (10), dans lequel ledit ensemble de lumières opérationnelles comprend un indicateur de direction avant gauche (30) et un indicateur de direction arrière gauche (34), ledit système d'informations de véhicule (12) étant adapté pour :
- recevoir un signal d'élément de fermeture de compartiment indicatif d'un élément de fermeture de compartiment (16, 18, 20, 22, 24, 26) dudit ensemble d'éléments de fermeture de compartiment (14) étant non fermé et/ou non verrouillé, et
- après réception dudit signal d'élément de fermeture de compartiment, émettre un signal d'informations audit véhicule (10) de telle sorte qu'une ou plusieurs des lumières dans ledit ensemble de lumières opérationnelles agencées vers l'extérieur (28) est activée pour ainsi indiquer quel élément de fermeture de compartiment dudit ensemble d'éléments de fermeture de compartiment (14) est non fermé et/ou non verrouillé, à chaque élément de fermeture de compartiment (16, 18, 20, 22, 24, 26) étant attribuée une activation individuelle dudit ensemble de lumières opérationnelles agencées vers l'extérieur (28), dans lequel
- après réception d'un signal indiquant que la porte avant gauche est non fermée et/ou non verrouillée, émettre un signal d'avertissement pour activer l'indicateur de direction avant gauche, et
- après réception d'un signal indiquant que la porte arrière gauche est non fermée et/ou non verrouillée, émettre un signal d'avertissement pour activer l'indicateur de direction arrière gauche.

2. Système d'informations de véhicule (12) selon la revendication 1, dans lequel ledit ensemble d'éléments de fermeture de compartiment (14) comprend au moins un élément parmi une porte avant (18), une porte arrière (22), un coffre à bagages (24) et un capot (26) dudit véhicule (10).

3. Système d'informations de véhicule (12) selon la revendication 1 ou 2, dans lequel ledit ensemble de lumières opérationnelles agencées vers l'extérieur (28) comprend au moins un élément parmi un indicateur de direction droite (32, 36), un phare (38), un feu arrière (40) et un feu de freinage (42).

4. Système d'informations de véhicule (12) selon l'une quelconque des revendications précédentes, dans lequel à chaque élément de fermeture de compartiment (16, 18, 20, 22, 24, 26) dudit ensemble d'éléments de fermeture de compartiment (14) est attribué un sous-ensemble individuel dudit ensemble de lumières opérationnelles (28).

5. Système d'informations de véhicule (12) selon l'une quelconque des revendications précédentes, dans lequel à chaque élément de fermeture de compartiment (16, 18, 20, 22, 24, 26) dudit ensemble d'éléments de fermeture de compartiment (14) est attribué une fréquence ou un schéma de clignotement individuel d'une ou plusieurs des lumières opérationnelles dudit ensemble de lumières opérationnelles (28).

6. Système d'informations de véhicule (12) selon l'une quelconque des revendications précédentes, ledit véhicule (10) comprenant en outre un moyen de signalisation audio (44), ledit système d'informations de véhicule (12) étant en outre adapté pour émettre un signal d'avertissement audio audit véhicule (10) de telle sorte que ledit moyen de signalisation audio (44) est activé pour ainsi indiquer qu'au moins un élément de fermeture de compartiment dudit ensemble d'éléments d'étanchéité de compartiment (14) est non fermé et/ou non verrouillé.

7. Système d'informations de véhicule (12) selon l'une quelconque des revendications précédentes, ledit système d'informations de véhicule (12) étant adapté pour recevoir un signal de verrouillage indiquant que ledit au moins un sous-ensemble de l'ensemble d'éléments de fermeture de compartiment (14) doit être verrouillé.

8. Système d'informations de véhicule (12) selon la revendication 7, dans lequel ledit système d'informations de véhicule (12) est adapté pour recevoir ledit signal d'élément de fermeture de compartiment et émettre ledit signal d'informations après réception dudit signal de verrouillage.

9. Véhicule (10) comprenant un système d'informations de véhicule (12) selon l'une quelconque des revendications précédentes.

10. Procédé pour indiquer un élément de fermeture de compartiment non fermé et/ou non verrouillé d'un véhicule, ledit véhicule comprenant un ensemble d'éléments de fermeture de compartiment (14) adaptés pour fermer un compartiment intérieur du véhicule (10) à l'environnement ambiant du véhicule (10), dans lequel ledit ensemble d'éléments de fermeture de compartiment (14) comprend une porte avant gauche (16) et une porte arrière gauche (20), ledit véhicule (10) comprenant en outre un ensemble de lumières opérationnelles (28), agencées vers l'extérieur du véhicule (10), et destinées à être utilisées pendant la conduite dudit véhicule (10), dans lequel ledit ensemble de lumières opérationnelles comprend un indicateur de direction avant gauche (30) et un indicateur de direction arrière gauche (34), ledit procédé comprenant :
- après détection du fait qu'un élément de fermeture de compartiment (16, 18, 20, 22, 24, 26) dudit ensemble d'éléments de fermeture de compartiment (14) est non fermé et/ou non verrouillé, l'activation d'une ou plusieurs des lumières dans ledit ensemble de lumières opérationnelles agencées vers l'extérieur (28) pour ainsi indiquer quel élément de fermeture de compartiment dudit ensemble d'éléments de fermeture de compartiment (14) est non fermé et/ou non verrouillé, à chaque élément de fermeture de compartiment (16, 18, 20, 22, 24, 26) étant attribuée une activation individuelle dudit ensemble de lumières opérationnelles agencées vers l'extérieur, dans lequel
- après détection du fait que la porte avant gauche est non fermée et/ou non verrouillée, l'émission d'un signal d'avertissement pour activer l'indicateur de direction avant gauche, et
après détection du fait que la porte arrière gauche est non fermée et/ou non verrouillée, l'émission d'un signal d'avertissement pour activer l'indicateur de direction arrière gauche.

11. Procédé selon la revendication 10, dans lequel ledit ensemble d'éléments de fermeture de compartiment (14) comprend au moins un élément parmi une porte avant (18), une porte arrière (22), un coffre à bagages (24) et un capot (26) dudit véhicule (10).

12. Procédé selon la revendication 10 ou 11, dans lequel ledit ensemble de lumières opérationnelles agencées vers l'extérieur (28) comprend au moins l'un d'un indicateur de direction droite (32, 36), d'un phare (38), d'un feu arrière (40) et d'un feu de freinage (42).

13. Procédé selon l'une quelconque des revendications 10 à 12, dans lequel à chaque élément de fermeture de compartiment dudit ensemble d'éléments de fermeture de compartiment (14) est attribué un sous-ensemble individuel dudit ensemble de lumières opérationnelles.

14. Procédé selon l'une quelconque des revendications 10 à 13, dans lequel à chaque élément de fermeture de compartiment (16, 18, 20, 22, 24, 26) dudit ensemble d'éléments de fermeture de compartiment (14) est attribué une fréquence ou un schéma de clignotement individuel d'une ou plusieurs des lumières opérationnelles dudit ensemble de lumières opérationnelles (28).

15. Procédé selon l'une quelconque des revendications 10 à 14, dans lequel ledit procédé comprend en outre :
- la détection du fait qu'au moins un sous-ensemble dudit ensemble d'éléments de fermeture de compartiment (14) doit être verrouillé, et
- après détection du fait que ledit ensemble d'éléments de fermeture de compartiment (14) doivent être verrouillés, la mise en œuvre de la procédure du procédé selon l'une quelconque des revendications 10 à 14.
